(19) Europäisches Patentamt
European Patent Office
Office européen des brevets

(11) **EP 1 701 016 B1**

(12) **EUROPEAN PATENT SPECIFICATION**

(45) Date of publication and mention
of the grant of the patent:
**13.06.2012 Bulletin 2012/24**

(51) Int Cl.:
*F02C 7/045* (2006.01)  *F02K 1/82* (2006.01)
*G10K 11/16* (2006.01)

(21) Application number: **06250597.9**

(22) Date of filing: **03.02.2006**

(54) **Acoustic liner with nonuniform impedance**

Akustische Auskleidung mit ungleichförmiger Impedanz

Revêtement acoustique avec impédance non uniforme

(84) Designated Contracting States:
**DE FR GB IE SE**

(30) Priority: **03.02.2005 US 49764**

(43) Date of publication of application:
**13.09.2006 Bulletin 2006/37**

(73) Proprietor: **United Technologies Corporation
Hartford, CT 06101 (US)**

(72) Inventor: **Patrick, William P.
Glastonbury, CT 06033 (US)**

(74) Representative: **Leckey, David Herbert
Dehns
St Bride's House
10 Salisbury Square
London
EC4Y 8JD (GB)**

(56) References cited:
| | |
|---|---|
| EP-A- 0 824 255 | EP-A- 1 548 229 |
| WO-A-03/106263 | WO-A-2005/083676 |
| US-A- 4 298 090 | US-A- 6 122 892 |
| US-A1- 2002 139 899 | US-A1- 2003 141 144 |

**Description**

**Technical Field**

This invention relates to noise attenuating liners for fluid handling ducts such as the inlet and exhaust ducts of turbine engines. US 2003/014 1144 A1, US 4,298,090, EP 1548229, WO 2005/083676 A1, US 6,122,892, EP 0824255 A2, US 2002/0139899 A1 and WO 03/106263 A1 all disclose prior art noise attenuation techniques.

**Background of the Invention**

Turbine engines, such as those used for aircraft propulsion, include an inlet duct for delivering air to the engine and an exhaust duct for discharging combustion products to the atmosphere. During operation, the engine generates noise that propagates to the environment through the open ends of the ducts. Because the noise is objectionable, engine manufacturers install acoustic liners on portions of the interior walls of the ducts. A commonly used type of acoustic liner features an array of resonator chambers sandwiched between a perforated face sheet and an imperforate backwall. The liner is installed in the duct so that the face sheet defines a portion of the interior wall surface and is exposed to the air or combustion products flowing through the duct. Acoustic liners are designed to reduce the amplitude of the noise across a bandwidth of frequencies referred to as the design frequency band.

Acoustic liners are not completely effective. Noise at frequencies outside the design frequency band are unaffected by the liner. Even noise within the design frequency band persists, albeit at a reduced amplitude. The residual noise, whether attenuated or not, can be reflected by the liner. Some of the noise decays too rapidly with distance to propagate outside the ducts. These decay susceptible noise modes are referred to as "cut-off" modes and are not of concern. Other noise modes are decay resistant and can easily propagate long distances. These are referred to as "cut-on" modes. If a decay resistant noise signal strikes the liner at a shallow enough angle, the noise signal can reflect at a similar shallow angle and can propagate out of the duct.

One way to attenuate the cut-on modes is to regulate the direction in which the liner reflects those modes. For example, if a decay resistant noise signal strikes the liner at a shallow angle, and does so far from the open end of the duct (i.e. remote from the intake plane of an inlet duct or remote from the exhaust plane of an exhaust duct) it could be beneficial to reflect that signal at a steeper angle, i.e. in a less axial direction. The principal benefit of the steeper reflection angle is that it causes the noise signal to experience repeated reflections off the liner as the signal propagates toward the open end of the duct. This is beneficial because each interaction with the liner further attenuates the noise signal, provided the frequency of the signal is within the design frequency band of the liner. Moreover, the reflected signal decays exponentially with distance due to the inability of sound at that frequency to propagate in the duct at that angle.

It may also be beneficial to reflect a noise signal into a direction more axial than the direction of the incident signal. For example if a noise signal strikes the liner close to the open end of the duct (i.e. near the intake plane of an inlet duct or near the exhaust plane of an exhaust duct) the axial distance between the point of incidence and the open end of the duct may be too small to intercept a reflected signal, even one reflected at a steep angle. Therefore, it may be more beneficial to reflect that signal in a more axial direction. This is because noise that propagates axially from an aircraft engine spreads out over a larger area before reaching the ground than does noise that propagates nonaxially from the engine. The resulting wider distribution of the noise reduces its amplitude, making it less disturbing to observers on the ground.

One known way to regulate the angle of reflection is to employ an active backwall. An active backwall includes vibratory elements such as piezoelectric flat panel actuators. A control system responds to acoustic sensors deployed on the liner by signaling the actuators to vibrate at an amplitude and a phase angle (relative to an incident noise signal) that causes the impedance of the liner to vary with time and to do so in a way that optimizes attenuation of an incident noise signal. However such liners are not completely satisfactory because their capability is limited by the power available to drive the actuators. Moreover, the active backwall introduces unwelcome weight, cost and complexity.

In principle, an engine designer can orient the entire liner (i.e the face sheet and the backwall) so that the liner reflects incident noise signals in one or more desired directions. However doing so is almost always impractical because the interior shape of the duct is governed by aerodynamic considerations. Because the liner face sheet defines at least part of the contour of the duct interior wall, orienting the entire liner to regulate the direction of reflected noise will almost always compromise the aerodynamic performance of the duct.

What is needed is a way to redirect reflected noise in a duct without introducing undue weight, cost or complexity and without jeopardizing the aerodynamic performance of the duct.

**Summary of the Invention**

It is, therefore, an object of the invention to redirect reflected noise in a duct without introducing undue weight, cost or complexity and without jeopardizing the aerodynamic performance of the duct.

According to one aspect of the invention, a method of attenuating noise in a fluid handling duct is provided, as set forth in claim 1.

According to another aspect of the invention, a fluid handling duct is provided, as set forth in claim 14.

In one detailed embodiment of the invention, the nonuniform impedance is attributable to a spatially nonuniform porosity of the face sheet.

The foregoing and other features of the various embodiments of the invention will become more apparent from the following description of various embodiments of the invention and the accompanying drawings.

## Brief Description of the Drawings

FIG. **1** is a schematic view of a gas turbine engine inlet duct including an acoustic liner taken in the direction **1-1** of FIG. **2,** i.e. looking parallel to the duct axis.

FIG. **2** is a cross sectional side elevation view in the direction **2-2** of FIG. **1.**

FIG. 3 is an enlarged view of the region **3-3** of FIG. **2** showing reflection of an approaching noise signal at an angle of reflection steeper than the angle of incidence.

FIG. **4** is a view taken in the direction **4-4** of FIG. **2** or FIG. **3.** showing a portion of the acoustic liner having a nonuniform acoustic impedance attributable to perforations that increase in size with increasing axial distance from a noise source.

FIG. **5** is a view looking in the direction **5-5** of FIG. **1.**

FIG. **6** is an enlarged view of the region **6-6** of FIG. **5** showing reflection of an approaching noise signal at an angle of reflection shallower than the angle of incidence.

FIG. **7** is a view taken in the direction **7-7** of FIG. **5** or FIG. **6** showing a portion of the acoustic liner having a nonuniform acoustic impedance attributable to perforations that decrease in size with increasing axial distance from a noise source.

FIG. **8** is a view similar to FIG. **3** illustrating the physical behavior of the inventive acoustic liner.

FIG. **9** is a view similar to FIG. **4** showing a portion of an acoustic liner having a nonuniform acoustic impedance attributable to perforations that change in size in both an axial and a circumferential direction.

FIG. **10** is a view similar to FIG. **3** showing an acoustic liner with a nonuniform acoustic impedance in combination with an oblique backwall.

FIG. **11** is a view similar to FIG. **3** showing an acoustic liner with a nonuniform acoustic impedance in combination with a stepped backwall.

FIG. **12** is a view similar to FIG. **3** showing an acoustic liner with a nonuniform acoustic impedance in combination with an active backwall.

FIG. **13** is a schematic, cross sectional side elevation view of a turbine engine exhaust nozzle with an acoustic liner having a spatially nonuniform impedance.

## Preferred Embodiments of the Invention

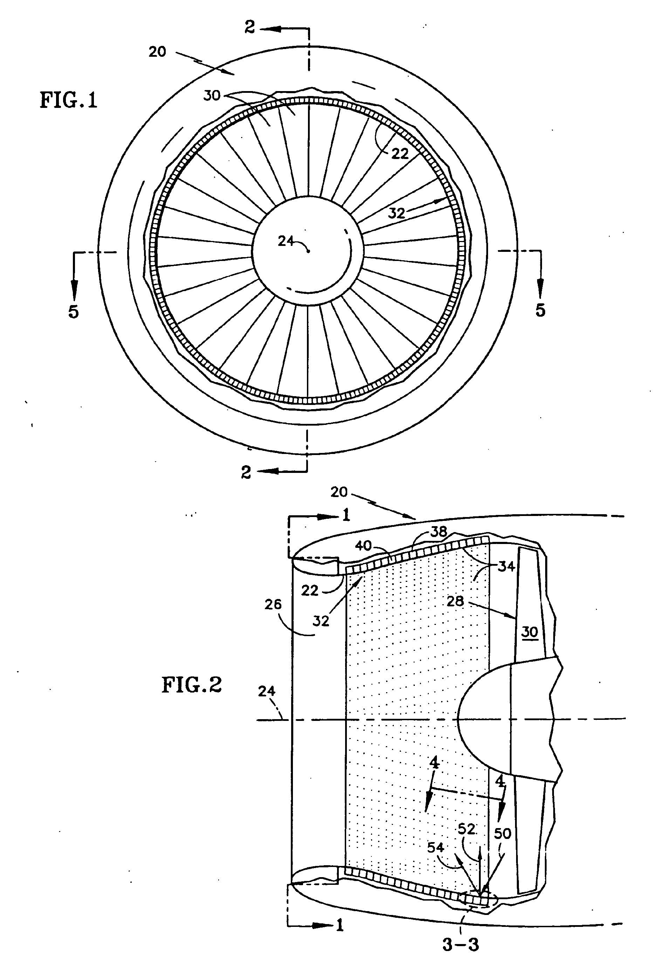

FIGS. **1, 2** and **5** illustrate a turbine engine inlet duct **20** defined by duct interior wall **22,** which circumscribes a duct axis **24.** The illustrated inlet duct is substantially circular in cross section when viewed parallel to the engine axis, although some inlet ducts have a noticeably less circular shape. One end **26** of the duct is open to the atmosphere. The other end of the duct, which is axially offset from the open end, is immediately forward of a compressor represented by a rotatable fan **28** having an array of blades **30.** During engine operation the fan is a source of noise, some of which is attenuated by an acoustic liner as already described.

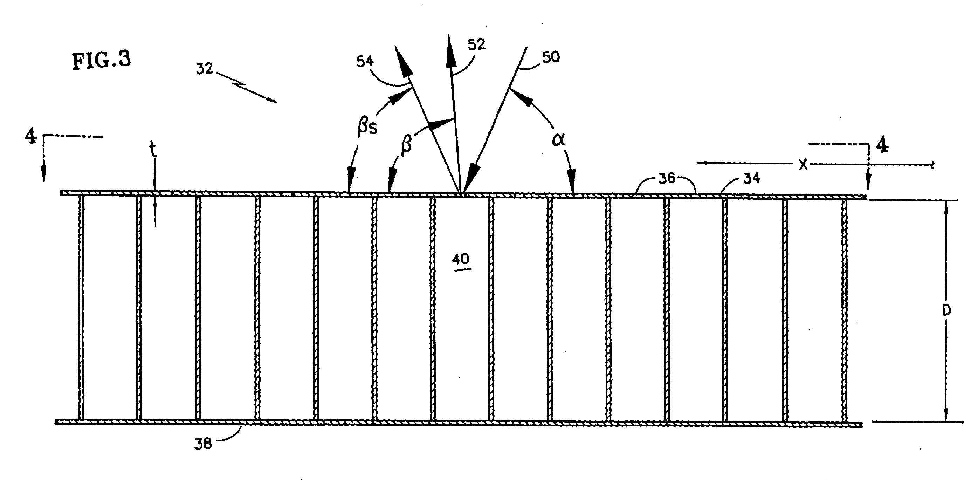

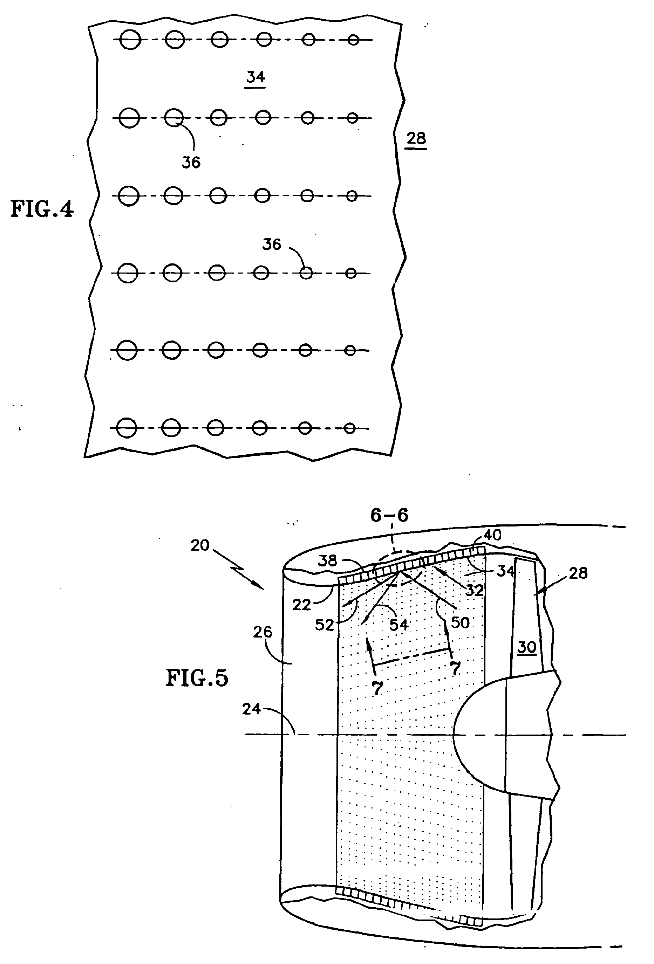

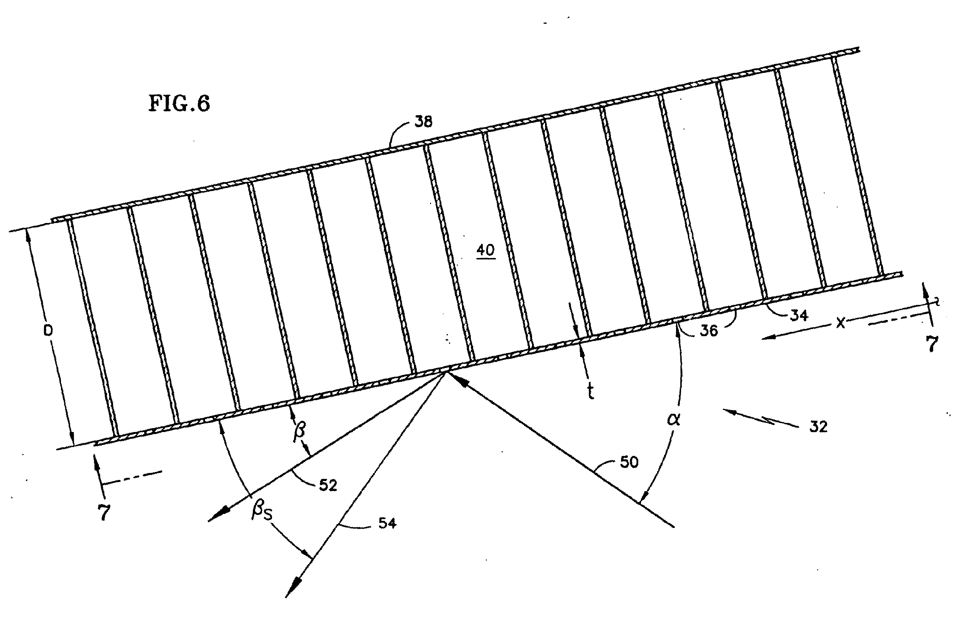

Portions of the duct interior wall **22** are lined with an acoustic liner **32.** A typical acoustic liner comprises a face sheet **34** perforated by numerous small holes **36** (visible in FIGS. **3, 4, 6** and **7**) and an imperforate back sheet or backwall **38** laterally spaced from the face sheet. The face sheet defines the interior contour of the duct wall as seen best in FIGS. **2** and **5.** An array of resonator chambers **40** or other sound attenuator occupies the space between the face sheet and the backwall. In many acoustic liners the resonator chambers are referred to as honeycomb cells because they each have a hexagonal or honeycomb shape as seen by an observer looking in direction **4-4** or **7-7.** The liner backwall **38** is offset from the face sheet by a depth D (FIGS. **3** and **6**). The depth may be uniform, as shown, or it may be nonuniform in which case the nonuniform depth may be used to regulate the direction of reflection as described more completely in a copending, commonly owned application (publication number EP1701028) entitled "Acoustic Liner with a variable Depth Backwall" and filed concurrently herewith .

The effectiveness of the liner depends on a property known as acoustic admittance, which is a measure of the ability of the liner to admit an acoustic disturbance into the chambers **40** so that the disturbance can be attenuated. Alternatively, the inability of a liner to admit and attenuate a disturbance is referred to as acoustic impedance. Acoustic impedance **Z** is a complex quantity having a real component known as resistance **R** and an imaginary component known as reactance **X,** i.e. **Z** = **R** + **iX**. Acoustic impedance is related to a time constant $\tau$, which is the period of time it takes a sound wave to enter the liner, reflect from the backwall and re-emerge from the face sheet. The time constant $\tau$ is primarily a function of the reactance component of the acoustic impedance.

For a liner as shown in FIG. **3** or FIG. **6,** the following relationships interrelate the time constant $\tau$, the liner parameters, the liner impedance and distance **x** along the liner. The impedance of the face sheet depicted in FIG. 3 or **6** is given by the equation:

$$Z \;=\; R \;+\; iX \qquad\qquad (1)$$

where **Z** is the impedance, **R** is the resistance, and **X** is the reactance. The reactance term can be expressed as

$$X = \omega M - \frac{1}{\omega C} \qquad\qquad (2)$$

where $\omega$ is the angular frequency of the noise signal of interest (i.e $\omega = 2\pi f$ where $f$ is the frequency of the noise signal) $M$ is the acoustic inertance, and $C$ is the acoustic compliance of the liner. Conversely, since the liner time constant is the inverse of the response frequency of the liner, i.e.

$$\omega = 2\pi f = \frac{2\pi}{\tau} \qquad\qquad (3)$$

the liner time constant can be determined from the following quadratic equation, which is obtained by multiplying equation (2) by $\omega$:

$$\omega^2 M - \omega X - \frac{1}{C} = 0 \qquad\qquad (4)$$

Substituting $\omega$ from equation (3) yields:

$$\tau^2 + 2\pi C X \tau - 4\pi^2 C M = 0 \qquad\qquad (5)$$

for a given value of the liner reactance **X.**

Solving the quadratic equation yields an expression for the time constant:

$$\tau = \pi C X \left( \sqrt{1 + \frac{4M}{CX^2}} - 1 \right) \qquad (6)$$

Near resonance the reactance $x$ will approach zero. The near-resonant condition allows determination of the resonant frequency, which is inversely proportional to the time delay of the liner. Accordingly:

$$\frac{4M\cancel{C}}{CX^2} \gg 1 \Rightarrow \tau = 2\pi\sqrt{MC} \qquad (7)$$

To first order, the inertance and compliance can be expressed in liner and aerodynamic parameters as:

$$M = \frac{\rho t'}{S} \quad \text{and} \qquad (8)$$

$$C = \frac{V}{\rho c^2} \qquad (9)$$

where:

$\rho$= air density;
$S$ = area of hole (or holes) in the face sheet leading to each individual resonator chamber;
$V$ = volume of each individual resonator chamber;
$c$= speed of sound; and
$t'=t+\delta_e$ where:

t is the physical thickness of the liner face sheet; and

$\delta_e = \dfrac{8d_h}{3\pi}$ where $\delta_e$ is an "end correction" for the holes 36 in face sheet; and $d_h$ is the diameter of the individual holes **36** in the face sheet (assuming circular holes).

The "end correction" referred to above is also referred to in acoustics texts as the mass loading at the ends of the opening into the resonator. The correction accounts for additional mass in the near field of the exit plane of the hole. The sound wave has to move that mass in addition to moving all the mass in the hole when it oscillates in the resonator neck.

As seen from the above, the acoustic impedance **Z** is directly proportional to the acoustic inertance **M**, which is inversely proportional to the open area of the face sheet. Thus the acoustic impedance is also inversely proportional to the area of the holes.

Resonance occurs when the acoustic reactance equals zero. At resonance the time constant is given by the relation:

$$\tau = 2\pi\sqrt{MC} = \frac{2\pi}{c}\left(\frac{Vt'}{S}\right)^{1/2} = \frac{2\pi}{c}\left(\frac{V(t+\frac{8d_h}{3\pi})}{S}\right)^{1/2} = \frac{2\pi}{c}\left(\frac{D(t+\frac{8d_h}{3\pi})}{\sigma}\right)^{1/2} \quad \textbf{(10)}$$

where $D$ is the depth of the liner and $\sigma$ is the fractional open area (i.e. the porosity) of the liner face sheet

Thus, at resonance the time constant is inversely proportional to the area of the holes and to the liner open area ratio (porosity). It is also directly proportional to the liner depth $D$.

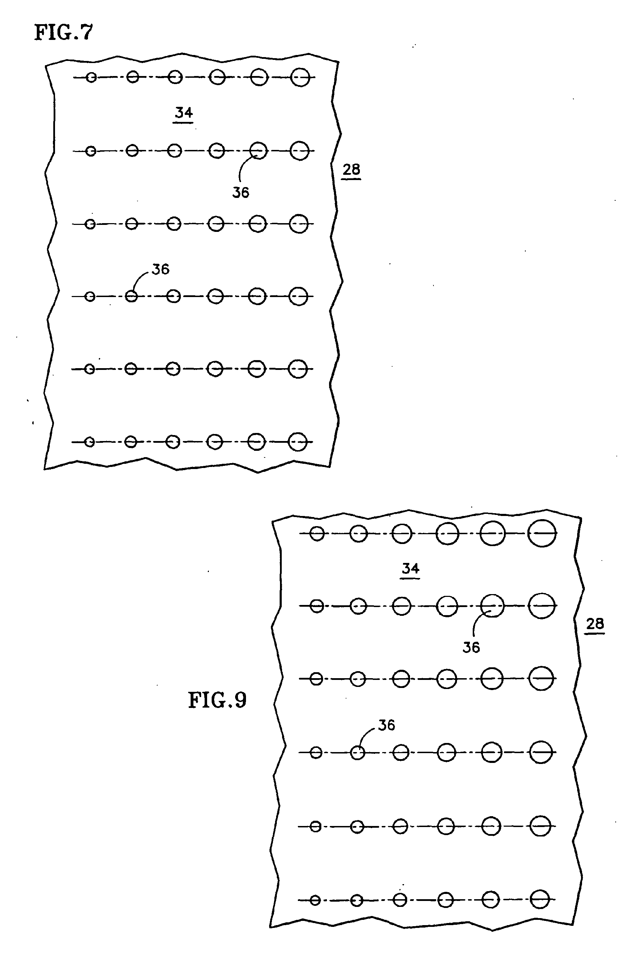

Referring to FIGS. **4** and **7**, the liner **32** has a spatially nonuniform acoustic impedance. In FIG. **4,** the impedance and the liner time constant decrease with increasing axial distance away from the noise source **28**. The impedance decrease is attributable to an increase in the area of holes **36,** i.e. an increase in porosity of the face sheet, with axial distance away from the noise source. In FIG. 7 the impedance and liner time constant increase with increasing axial distance *x* away from the noise source **28**. The impedance increase is attributable to a decrease in the area of holes **36**, i.e. a decrease in porosity of the face sheet, with axial distance *x* away from the noise source. As will be described in more detail below, the spatial distribution of the impedance, and hence of the liner time constant, is selected to direct sound waves incident on the face sheet into a prescribed direction relative to the face sheet.

Referring to FIGS. **2-4,** a representative sound wave or noise signal **50** produced by the fan propagates forwardly through the inlet duct. The trajectory of the illustrated noise signal is describable by a directional component parallel to the face sheet **34** (and therefore approximately axial) and a directional component perpendicular to the face sheet (and therefore approximately radial). The illustrated noise signal strikes the liner at an angle of incidence $\alpha$ and does so far from the open end **26** of the inlet duct. The nonuniform impedance, which in this case decreases with increasing distance away from the noise source, reflects any residue of the incident noise signal **50** in a prescribed direction as indicated by reflected signal **52** and its associated angle of reflection $\beta$. If the impedance were spatially uniform, the signal would have reflected at a specular angle of reflection $\beta_s$ equal to the incidence angle $\alpha$ and propagated along a specular trajectory **54,** i.e. a trajectory whose directional components parallel and perpendicular to the face sheet **34** are equal in magnitude to the corresponding directional components of the incident signal **50.** However, as seen in FIGS. **2** and **3,** the inventive liner causes the parallel directional component of the reflected signal **52** to be lower in magnitude than the parallel directional component of the incident signal, and the perpendicular directional component of the reflected signal to be greater in magnitude than the perpendicular directional component of the incident signal. In other words the reflected trajectory is steeper than the incident trajectory. As a result, the reflected signal has more opportunities to repeatedly reflect off the liner as it propagates toward the open end of the duct, which provides repeated opportunities for the liner to attenuate the noise signal.

FIGS. **5-7** are similar to FIGS. **2-4** but show a noise signal 50 striking the liner near the open end **26** of the inlet duct. The nonuniform impedance, which in this case increases with increasing distance away from the noise source reflects any residue of the incident noise signal **50** in a prescribed direction as indicated by reflected signal 52 and its associated angle of reflection $\beta$. If the impedance were spatially uniform, the signal would have reflected at a specular angle of reflection $\beta_s$ equal to incidence angle $\alpha$ and propagated along a specular trajectory **54,** i.e. a trajectory whose directional components parallel and perpendicular to the face sheet **34** are equal in magnitude to the corresponding directional components of the incident signal. However, as seen in FIGS. **5** and **6,** the inventive liner causes the parallel directional component of the reflected signal **52** to be greater in magnitude than the parallel directional component of the incident signal, and the perpendicular directional component of the reflected signal to be lower in magnitude than the perpendicular directional component of the incident signal. In other words the reflected trajectory is shallower than the incident trajectory. As a result, the reflected signal propagates in a more axial direction and therefore is less disturbing to the surrounding community than is nonaxially propagating noise.

The prescribed direction of reflection need not be the same direction for all portions of the liner. This is evident from the foregoing examples in which portion **3-3** of the liner reflects the incident noise signal in a prescribed direction that is less axial and more radial than the incident signal whereas portion **6-6** of the liner reflects the incident signal in prescribed direction that is more axial and less radial than the incident signal.

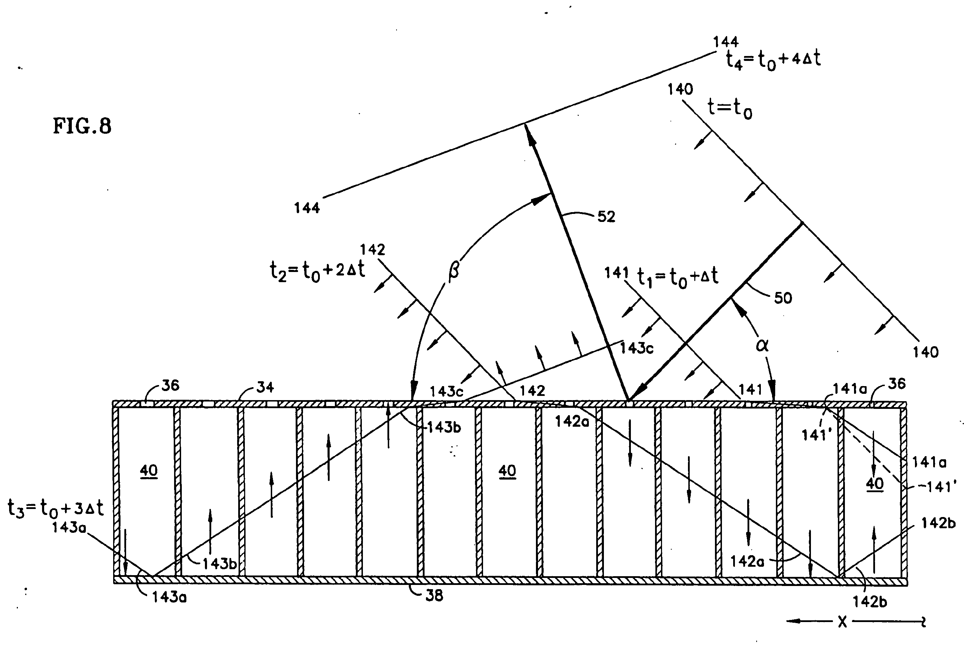

FIG. **8** schematically illustrates the physical behavior of the inventive acoustic liner described above. In FIG. **8,** the impedance of the surface varies such that the liner time constant, r, varies linearly according to the equation

$$\tau = \tau_0 - \frac{x/c}{\tan\alpha}\left(1 - \frac{\tan\alpha}{\tan(\alpha+\gamma)}\right) \qquad\qquad (11)$$

where $x$ is the distance along the face sheet such that $x$ increases with increasing distance away from the noise source **28,** $\tau_o$ is the time constant at an arbitrary value of $x$ (typically at the extremity of the liner closest to the noise source) $\alpha$ is the angle of incidence, $\gamma$ is one-half the difference between the prescribed reflection angle $\beta$ (relative to the face sheet) and a specular angle of reflection $\beta_s$ and $c$ is the speed of sound. For the $x$ coordinate system shown in FIG. **8,** both the time constant and the impedance decrease with increasing distance from the noise source.

Continuing to refer to FIG. **8,** a sound wave represented by incident noise signal 50 approaches the liner surface at an incidence angle $\alpha$. Line **140-140** depicts a line of equal phase (e.g. maximum pressure crest) at time to. At a later time, $t_1 = t_o + \Delta t$, the wave has progressed forward by a distance $s_1 = c(\Delta t)$ where c is the speed of propagation. The portion of the wave that has not yet entered the liner at time $t_1$ is depicted by line segment **141-141.** The part of the wave that had been closest to the liner face at time $t_o$ is depicted by line segment **141a-141a.** This wave portion **141a-141a,** which has now entered the resonator chambers, has been delayed by the face sheet and refracted due to the linearly varying time delay imposed on the wavefront by the nonuniform, linearly varying impedance. Line segment **141'-141'** indicates the position of the wavefront in the liner if the wavefront had been delayed by a constant amount (i.e. uniform impedance distribution at the liner face sheet). The vertical distance between **141a-141a** and **141'-141'** diminishes with increasing $x$ because the time delay imposed by propagation of the wave through the liner face decreases in the direction of increasing $x$. At time $t_2 = t_o + 2\Delta t$, the portion of the wave which has not yet entered the liner is depicted by line segment **142-142.** The portion of the wave represented by **142a-142a** has entered the liner, been delayed and refracted as described above, and is still progressing toward the backwall. Another part of the wave, indicated by segment **142b-142b,** has struck the backwall and has rebounded toward the face sheet. Thus, at time $t_2$ the wave is depicted by line segments **142-142, 142a-142a,** and **142b-142b.** At time $t_3 = t_o + 3\Delta t$, the wave portion **143a-143a** is progressing toward the backwall. Portion **143b-143b** has rebounded from the backwall. Portion **143c-143c** has exited through the face sheet and has been further delayed and refracted as already described. At time $t_4 = $ to $+ 4\Delta t$, the wave has completely exited the liner and is depicted by line **144-144.** The angle $\beta$ of the reflected signal **52** is thus seen to be equal to $\alpha$ **+ 2$\gamma$.** For the example shown in FIG. **8,** the incidence angle $\alpha$ is about 45 degrees, $\gamma$ is about 12.5 degrees, and the angle of reflection $\beta$ relative to the face sheet is about 70 degrees. The designer uses the relationships $\beta= \alpha + 2\gamma$ and

$$\tau = \tau_0 \pm \frac{x/c}{\tan\alpha}\left(1 - \frac{\tan\alpha}{\tan(\alpha+\gamma)}\right)$$ to define how the time constant $\tau$, and therefore the impedance, should vary as a function of distance in order to prescribe a desired angle of reflection $\beta$ at any given location within the duct. As already noted, an impedance that decreases with increasing distance from the noise source vectors the sound wave more radially as seen in FIGS. **2, 3** and **8** (or even back towards the source for a large enough increase). An impedance that increases with increasing distance from the noise source vectors the sound wave in a more axial direction within the duct as seen in FIGS. **5** and **6.**

The prescribed direction will ordinarily be a nonspecular direction relative to the face sheet, however some portions of the liner may have a spatially uniform impedance to achieve a specular reflection relative to the face sheet if such a direction is consistent with noise attenuation goals or if it is necessary to form a transition between portions of the liner that each reflect nonspecularly relative to the face sheet.

The above examples show incident noise signals with both axial and radial directional components. However noise signals radiating from engine fans typically exhibit spinning modes that propagate toward the liner with a spiral motion. Such incident sound waves have a circumferential component in addition to axial and radial components. Therefore, the acoustic impedance may vary in the circumferential direction instead of, or in addition to, varying in the axial direction. This is seen in FIG. **9** where the areas of the holes **36,** and therefore the porosity of the face sheet, change in both the axial and circumferential directions to redirect the reflected noise signal in the most desirable prescribed direction.

Although the examples discussed herein show linearly varying impedance, the impedance may be distributed nonlinearly.

The foregoing discussion and accompanying illustrations describe the use of varying diameters (areas) of holes **36** to spatially vary the face sheet porosity thereby achieving the desired non-uniform acoustic impedance distribution. However the same effect can be achieved by varying the density of holes having uniform diameters, or by a combination of varying hole size and density. For conventional liners with hole diameters on the order of about 0.10 inches (0.25 centimeters) variation of hole diameter may be the most desirable approach because the uniform spacing between the holes makes it easier to ensure that there is at least one hole **36** leading to each resonator chamber **40**. However with a micro-perforated liner in which the hole diameters can be on the order of 0.004 to 0.010 inches (0.010 to 0.025 cm.) it may be more desirable to vary the density of the holes while maintaining the hole diameter constant.

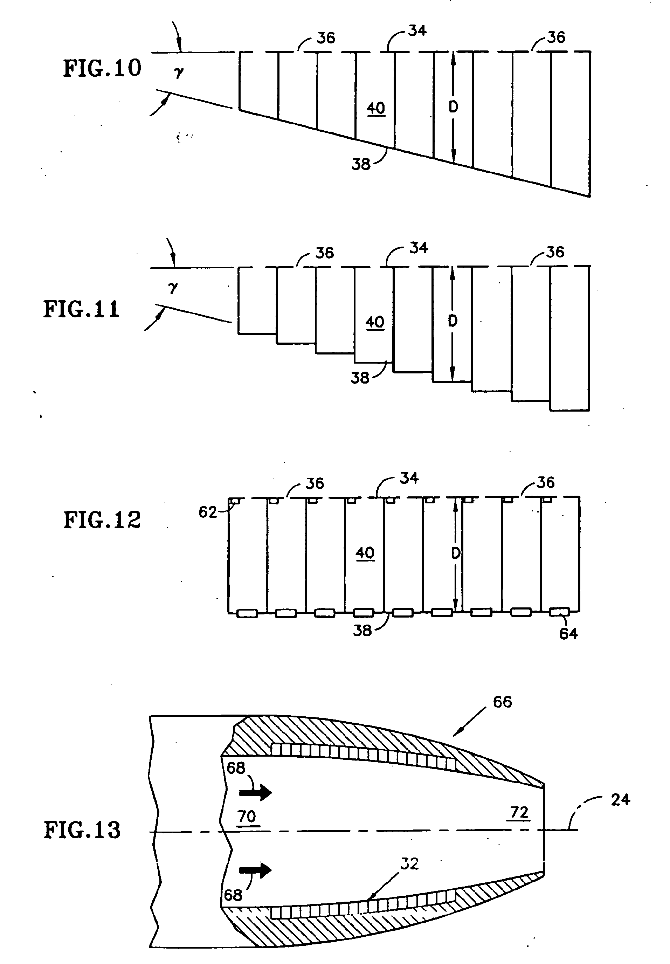

As seen in FIGS. **10** and **11**, the nonuniform impedance may be used in combination with an oblique backwall or a stepped backwall, both of which are described in more detail in EP 1701028.

Referring to FIG. **12,** the present invention may be used in combination with an active backwall. As illustrated in FIG. **12,** an active backwall includes vibratory elements **64** such as piezoelectric flat panel actuators. A control system responds to acoustic sensors **62** by signaling the actuators to vibrate at an amplitude and a phase angle (relative to an incident noise signal) that causes the impedance of the liner to vary with time and to do so in a way that optimizes attenuation of an incident noise signal. The use of the variable impedance backwall in combination with active elements may reduce the operational demands on the active elements leading to an accompanying reduction in the power required to drive them.

The invention, although described in the context of a turbine engine inlet duct, is equally applicable to other types of ducts, including a turbine engine exhaust duct. As seen in the schematically illustrated exhaust duct **66** of FIG. **13,** the noise source is hot, high velocity exhaust gases **68** entering upstream end **70** of the duct. The noise propagates downstream and toward the open or downstream end **72** of the duct.

In addition, although the examples shown in the figures and discussed in the text assume that the phase speed (wave propagation speed) is equal to the thermodynamic sound speed, it should be recognized that the concept described herein works equally well when the wave propagation speed deviates significantly from the thermodynamic sound speed, which can occur for sound propagation in lined ducts.

Although this invention has been shown and described with reference to a specific embodiment thereof, it will be understood by those skilled in the art that various changes in form and detail may be made without departing from the invention as set forth in the accompanying claims.

**Claims**

1. A method of attenuating noise in a fluid handling duct (20) comprising an acoustic liner (32), said liner (32) comprising a face sheet (34) and a backwall (38), the method comprising:

   determining the specular angle of reflection of a sound wave incident on said liner (32);
   determining a desired nonspecular angle of reflection of said sound wave incident on said liner (32); and
   providing portions of said liner (32) with a spatially nonuniform acoustic impedance so as to reflect said sound wave at said desired nonspecular angle of reflection, wherein the spatially nonuniform acoustic impedance is provided by configuring the portions of the liner (32) with a time constant $\tau$ that varies with distance x away from a noise source according to the equation:

$$\tau = \tau_0 \pm \frac{x/c}{\tan\alpha}\left(1 - \frac{\tan\alpha}{\tan(\alpha+\gamma)}\right)$$

   where $\alpha$ is an incidence angle and $\gamma$ is one-half the difference between the desired nonspecular angle of reflection and the specular angle of reflection, the incidence angle and the desired nonspecular angle of reflection being taken relative to the face sheet, $\tau_0$ is a value of the time constant at an arbitrary value of x, and c is the speed of sound.

2. The method of claim 1 wherein the face sheet (34) has a spatially nonuniform porosity.

3. The method of claim 1 or 2 wherein the impedance increase with increasing distance from a noise source.

4. The method of claim 1 or 2 wherein the impedance decreases with increasing distance from a noise source.

5. The method of any preceding claim wherein the incident sound waves and the direction of said desired nonspecular reflection are both describable by at least a directional component parallel to the face sheet (34) and a directional component perpendicular to the face sheet (34) and wherein the parallel directional component of the desired nonspecular direction is lower in magnitude than the parallel directional component of the incident sound waves and the perpendicular directional component of the desired nonspecular direction is greater in magnitude than the perpendicular directional component of the incident sound waves.

6. The method of any of claims 1 to 4 wherein the incident sound waves and the direction of said desired nonspecular reflection are both describable by at least a directional component parallel to the face sheet (34) and a directional component perpendicular to the face sheet (34) and wherein the parallel directional component of the desired nonspecular direction is greater in magnitude than the parallel directional component of the incident sound waves and the perpendicular directional component of the desired nonspecular direction is lower in magnitude than the perpendicular directional component of the incident sound waves.

7. The method of any preceding claim wherein the duct (20) is a turbine engine inlet duct and wherein a compressor downstream of the inlet is a noise source that introduces noise into the duct (20).

8. The method of any of claims 1 to 6 wherein the duct (20) is a turbine engine exhaust duct and wherein a stream of exhaust gases entering an upstream end of the duct is a noise source.

9. The method of any preceding claim wherein the liner (32) has a backwall (38) having an oblique orientation relative to the face sheet (34).

10. The method of any preceding claim wherein the liner (32) has a stepped backwall (38).

11. The method of any preceding claim wherein the liner comprises an active backwall (38).

12. The method of any preceding claim wherein an array of resonator chambers (40) occupies the lateral space between the face sheet (34) and the backwall (38).

13. The method of any preceding claim wherein the liner (32) has a face sheet (34) perforated by holes (36), the holes (36) being at least one of:

    (a) nonuniformly spatially distributed and
    (b) nonuniformly sized.

14. A fluid handling duct (20) including an acoustic liner (32) comprising a face sheet (34) and a backwall (38), portions of said liner (32) having a, spatially nonuniform acoustic impedance, **characterized in that** the impedance is spatially distributed to direct sound waves incident on the liner (32) in a prescribed nonspecular direction relative to the face sheet (34), wherein the portions of the liner (32) have a time constant that varies with distance x away from a noise source according to the equation:

$$\tau \simeq \tau_0 \pm \frac{x/c}{\tan\alpha}\left(1 - \frac{\tan\alpha}{\tan(\alpha+\gamma)}\right);$$

where $\alpha$ is an incidence angle and $\gamma$ is one-half the difference between the prescribed nonspecular angle of reflection and a specular angle of reflection, the incidence angle and the prescribed nonspecular angle of reflection being taken relative to the face sheet, $\tau_0$ is a value of the time constant at an arbitrary value of x, and c is the speed of sound.

**Patentansprüche**

1. Verfahren zum Dämpfen von Geräusch in einem Fluidhandhabungskanal (20) mit einer akustischen Auskleidung (32), wobei die Auskleidung (32) einen vorderen Flächenkörper (34) und eine Rückwand (38) aufweist, wobei das Verfahren folgende Schritte aufweist:

    Bestimmen des Winkels der gerichteten Reflexion einer Schallwelle, die auf die Auskleidung (32) auftrifft;
    Bestimmen eines gewünschten Winkels der ungerichteten Reflexion der Schallwelle, die auf die Auskleidung (32) auftrifft; und

Versehen von Bereichen der Auskleidung (32) mit einer räumlich ungleichmäßigen akustischen Impedanz, um die Schallwelle mit dem gewünschten Winkel der ungerichteten Reflexion zu reflektieren, wobei die räumlich ungleichmäßige akustische Impedanz durch Konfigurieren der Bereiche der Auskleidung (32) mit einer Zeitkonstante τ gebildet wird, die mit der Distanz x in Richtung von einer Geräuschquelle weg gemäß der nachfolgenden Gleichung variiert:

$$\tau = \tau_0 \pm \frac{x/c}{\tan \alpha}\left(1 - \frac{\tan \alpha}{\tan(\alpha + \gamma)}\right)$$

wobei $\alpha$ ein Einfallswinkel ist und $\gamma$ eine Hälfte der Differenz zwischen dem gewünschten Winkel der ungerichteten Reflexion und dem Winkel der gerichteten Reflexion ist, wobei der Einfallswinkel und der gewünschte Winkel der ungerichteten Reflexion relativ zu dem vorderen Flächenkörper gezogen sind, wobei $\tau_0$ ein Wert der Zeitkonstante bei einem beliebigen Wert von x ist und wobei c die Schallgeschwindigkeit ist.

2. Verfahren nach Anspruch 1,
   wobei der vordere Flächenkörper (34) eine räumlich nicht gleichmäßige Porosität aufweist.

3. Verfahren nach Anspruch 1 oder 2,
   wobei die Impedanz mit zunehmender Distanz von einer Geräuschquelle ansteigt.

4. Verfahren nach Anspruch 1 oder 2,
   wobei die Impedanz mit zunehmender Distanz von einer Geräuschquelle abnimmt.

5. Verfahren nach einem der vorausgehenden Ansprüche,
   wobei die einfallenden Schallwellen und die Richtung der gewünschten ungerichteten Reflexion beide zumindest von einer zu dem vorderen Flächenkörper (34) parallelen Richtungskomponente und einer zu dem vorderen Flächenkörper (34) rechtwinkligen Richtungskomponente umschreibbar sind und wobei die parallele Richtungskomponente der gewünschten ungerichteten Richtung in ihrem Betrag kleiner ist als die parallele Richtungskomponente der einfallenden Schallwellen und die rechtwinklige Richtungskomponente der gewünschten ungerichteten Richtung in ihrem Betrag größer ist als die rechtwinklige Richtungskomponente der einfallenden Schallwellen.

6. Verfahren nach einem der Ansprüche 1 bis 4,
   wobei die einfallenden Schallwellen und die Richtung der gewünschten ungerichteten Reflexion beide zumindest von einer zu dem vorderen Flächenkörper (34) parallelen Richtungskomponente und einer zu dem vorderen Flächenkörper (34) rechtwinkligen Richtungskomponente umschreibbar sind und wobei die parallele Richtungskomponente der gewünschten ungerichteten Richtung in ihrem Betrag größer ist als die parallele Richtungskomponente der einfallenden Schallwellen und die rechtwinklige Richtungskomponente der gewünschten ungerichteten Richtung in ihrem Betrag kleiner ist als die rechtwinklige Richtungskomponente der einfallenden Schallwellen.

7. Verfahren nach einem der vorausgehenden Ansprüche,
   wobei es sich bei dem Kanal (20) um einen Turbinenmaschinen-Einlasskanal handelt und wobei es sich bei einem dem Einlass nachgeordneten Kompressor um eine Geräuschquelle handelt, die Geräusch in den Kanal (20) einbringt.

8. Verfahren nach einem der Ansprüche 1 bis 6,
   wobei es sich bei dem Kanal (20) um einem Turbinenmaschinen-Auslasskanal handelt und wobei ein Abgasstrom, der an einem strömungsaufwärtigen Ende des Kanals eintritt, eine Geräuschquelle bildet.

9. Verfahren nach einem der vorausgehenden Ansprüche,
   wobei die Auskleidung (32) ein Rückwand (38) aufweist, die eine geneigte Orientierung relativ zu dem vorderen Flächenkörper (34) besitzt.

10. Verfahren nach einem der vorausgehenden Ansprüche,
    wobei die Auskleidung (32) eine stufige Rückwand (38) aufweist.

**11.** Verfahren nach einem der vorausgehenden Ansprüche,
wobei die Auskleidung eine aktive Rückwand (38) aufweist.

**12.** Verfahren nach einem der vorausgehenden Ansprüche,
wobei eine Anordnung von Resonatorkammern (40) den lateralen Raum zwischen dem vorderen Flächenkörper (34) und der Rückwand (38) einnimmt.

**13.** Verfahren nach einem der vorausgehenden Ansprüche,
wobei die Auskleidung (32) einen vorderen Flächenkörper (34) aufweist, der mit Öffnungen (36) perforiert ist, wobei es sich bei den Öffnungen (36) um mindestens eine Art handelt von:

(a) räumlich ungleichmäßig verteilt und
(b) ungleichmäßig dimensioniert.

**14.** Fluidhandhabungskanal (20) mit einer akustischen Auskleidung (32), die einen vorderen Flächenkörper (34) und eine Rückwand (38) aufweist, wobei Bereiche der Auskleidung (32) eine räumlich ungleichmäßige akustische Impedanz aufweisen,
**dadurch gekennzeichnet, dass** die Impedanz räumlich verteilt ist, um auf die Auskleidung (32) auftreffende Schallwellen in einer vorbestimmten ungerichteten Richtung relativ zu dem vorderen Flächenkörper (34) zu richten, wobei die Bereiche der Auskleidung (32) eine Zeitkonstante $\tau$ aufweisen, die mit der Distanz x in Richtung von einer Geräuschquelle weg gemäß der nachfolgenden Gleichung variiert:

$$\tau = \tau_0 \pm \frac{x/c}{\tan\alpha}\left(1 - \frac{\tan\alpha}{\tan(\alpha + \gamma)}\right)$$

wobei $\alpha$ ein Einfallswinkel ist und $\gamma$ eine Hälfte der Differenz zwischen dem vorbestimmten Winkel der ungerichteten Reflexion und dem Winkel der gerichteten Reflexion ist, wobei der Einfallswinkel und der gewünschte Winkel der ungerichteten Reflexion relativ zu dem vorderen Flächenkörper gelegt sind, wobei $\tau_0$ ein Wert der Zeitkonstante bei einem beliebigen Wert von $x$ ist und wobei c die Schallgeschwindigkeit ist.

**Revendications**

**1.** Procédé d'atténuation du bruit dans un conduit (20) de traitement de fluide comprenant un revêtement insonorisant (32), ledit revêtement (32) comprenant une peau (34) et une paroi arrière (38), le procédé comprenant les étapes consistant à :

déterminer l'angle de réflexion spéculaire d'une onde sonore incidente sur ledit revêtement (32) ;
déterminer un angle de réflexion non spéculaire souhaité de ladite onde sonore incidente sur ledit revêtement (32) ; et
conférer à des parties dudit revêtement (32) une impédance acoustique spatialement non uniforme de manière à réfléchir ladite onde sonore audit angle de réflexion non spéculaire souhaité, laquelle impédance acoustique spatialement non uniforme est conférée en dotant les parties du revêtement (32) d'une constante de temps $\tau$ qui varie en fonction d'une distance x depuis une source de bruit selon l'équation :

$$\tau = \tau_0 \pm \frac{x/c}{\tan\alpha}\left(1 - \frac{\tan\alpha}{\tan(\alpha + \gamma)}\right)$$

où $\alpha$ est un angle d'incidence et $\gamma$ représente la moitié de la différence entre l'angle de réflexion non spéculaire souhaité et l'angle de réflexion spéculaire, l'angle d'incidence et l'angle de réflexion non spéculaire souhaité étant pris par rapport à la peau, $\tau_0$ est une valeur de la constante de temps à une valeur arbitraire de x et c est la vitesse du son.

**2.** Procédé selon la revendication 1, la peau (34) présentant une porosité spatialement non uniforme.

**3.** Procédé selon la revendication 1 ou 2, l'impédance augmentant lorsque la distance depuis une source de bruit augmente.

**4.** Procédé selon la revendication 1 ou 2, l'impédance diminuant lorsque la distance depuis une source de bruit augmente.

**5.** Procédé selon l'une quelconque des revendications précédentes, les ondes sonores incidentes et la direction de ladite réflexion non spéculaire souhaitée pouvant être exprimées ensemble par au moins une composante de direction parallèle à la peau (34) et une composante de direction perpendiculaire à la peau (34), et la composante de direction parallèle de la direction non spéculaire souhaitée étant inférieure en amplitude à la composante de direction parallèle des ondes sonores incidentes et la composante de direction perpendiculaire de la direction non spéculaire souhaitée étant supérieure en amplitude à la composante de direction perpendiculaire des ondes sonores incidentes.

**6.** Procédé selon l'une quelconque des revendications 1 à 4, les ondes sonores incidentes et la direction de ladite réflexion non spéculaire souhaitée pouvant être exprimées ensemble par au moins une composante de direction parallèle à la peau (34) et une composante de direction perpendiculaire à la peau (34), et la composante de direction parallèle de la direction non spéculaire souhaitée étant supérieure en amplitude à la composante de direction parallèle des ondes sonores incidentes et la composante de direction perpendiculaire de la direction non spéculaire souhaitée étant inférieure en amplitude à la composante de direction perpendiculaire des ondes sonores incidentes.

**7.** Procédé selon l'une quelconque des revendications précédentes, le conduit (20) étant un conduit d'admission de moteur à turbine, et un compresseur situé en aval de l'admission constituant une source de bruit qui introduit du bruit dans le conduit (20).

**8.** Procédé selon l'une quelconque des revendications 1 à 6, le conduit (20) étant un conduit d'échappement de moteur à turbine, et un flux de gaz d'échappement pénétrant dans une extrémité amont du conduit constituant une source de bruit.

**9.** Procédé selon l'une quelconque des revendications précédentes, le revêtement (32) comprenant une paroi arrière (38) présentant une orientation oblique par rapport à la peau (34).

**10.** Procédé selon l'une quelconque des revendications précédentes, le revêtement (32) comprenant une paroi arrière en gradins (38).

**11.** Procédé selon l'une quelconque des revendications précédentes, le revêtement (32) comprenant une paroi arrière active (38).

**12.** Procédé selon l'une quelconque des revendications précédentes, un réseau de chambres de résonance (40) occupant l'espace latéral entre la peau (34) et la paroi arrière (38).

**13.** Procédé selon l'une quelconque des revendications précédentes, le revêtement (32) comprenant une peau (34) perforée de trous (36), les trous (36) étant :

(a) répartis non uniformément spatialement, et/ou
(b) dimensionnés non uniformément.

**14.** Conduit (20) de traitement de fluide, comportant un revêtement insonorisant (32) comprenant une peau (34) et une paroi arrière (38), des parties dudit revêtement (32) présentant une impédance acoustique spatialement non uniforme,
**caractérisé en ce que** l'impédance est spatialement répartie de manière à diriger des ondes sonores incidentes sur le revêtement (32) dans une direction non spéculaire prescrite par rapport à la peau (34), les parties du revêtement (32) possédant une constante de temps $\tau$ qui varie en fonction d'une distance x depuis une source de bruit selon l'équation :

$$\tau = \tau_0 \pm \frac{x\,/\,c}{\tan\alpha}\left(1 - \frac{\tan\alpha}{\tan(\alpha + \gamma)}\right)$$

où $\alpha$ est un angle d'incidence et $\gamma$ représente la moitié de la différence entre l'angle de réflexion non spéculaire prescrit et l'angle de réflexion spéculaire, l'angle d'incidence et l'angle de réflexion non spéculaire prescrit étant pris par rapport à la peau, $\tau_0$ est une valeur de la constante de temps à une valeur arbitraire de x et c est la vitesse du son.

FIG.1

FIG.2

FIG.3

EP 1 701 016 B1

**FIG.4**

34

36

28

36

**FIG.5**

6-6

20

38

40

22

52

54

50

32

34

28

26

24

7

7

30

FIG.6

EP 1 701 016 B1

FIG.7

34

36

28

36

FIG.9

34

36

28

36

FIG.8

**FIG.10**

**FIG.11**

**FIG.12**

**FIG.13**

20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030141144 A1
- US 4298090 A
- EP 1548229 A
- WO 2005083676 A1
- US 6122892 A
- EP 0824255 A2
- US 20020139899 A1
- WO 03106263 A1
- EP 1701028 A